# EUROPEAN PATENT APPLICATION

(11) **EP 1 788 238 A2**
(43) Date of publication of application: **23.05.2007**
(21) Application number: 06396021.5
(22) Date of filing: 16.11.2006
(51) Int. Cl.: F03D 7/02, F03D 11/00

(54) **Replaceable wear element for wind turbine blade pitch adjustment mechanism**

(30) Priority: 16.11.2005 FI 20051166
(71) Applicant: Winwind Oy, 00210 Helsinki (FI)
(72) Inventor: Böhmeke, Georg, 00210 Helsinki (FI)
(74) Representative: Helino, Timo Kalervo

(57) **Abstract**

The invention relates to a device for adjusting the blade angle of a rotor blade of a wind power plant, the device including a gear rim (4) supported on the blade (1) as well as a gear wheel (5) with power units, supported on the centre of the rotor, for turning the gear rim and the blade angle of the blade together with it. According to the invention, between the gear rim (4) and the gear wheel (5) there is a power transmission element (6) of a material with a weaker abrasion resistance than the materials of the gear rim and gear wheel, the power transmission element being arranged to prevent a direct contact between the gear rim and the gear wheel.

## Description

The present invention relates to a device defined in the preamble of claim 1 for adjusting the blade angle of a rotor blade of a wind power plant.

### BACKGROUND OF THE INVENTION

The blade angles of rotor blades of a wind power plant are adjusted in a manner required by the wind conditions to adjust the rotational speed of the rotor or the power transmitted by the generator attached to the rotor. Usually in the blade root, such as in conjunction with the bearing of the blade, there is a gear rim which is coaxial with the longitudinal axis of rotation of the blade; and coupled to the gear rim, into contact therewith, is a gear wheel that is rotated by an electric motor to achieve the desired blade angle. In the electric motor there is a magnetic brake by which the blade angle is kept in place in the desired value.

Usually, the number of teeth of a gear rim is 100 to 200 and the number of teeth of the cogwheel is 10 to 20. In the partial load areas; that is, in the most generally occurring wind intensity areas, the blade angles of the blades are driven to an optimal position, where they can be kept for days, until the wind either calms down, which is when the machine is turned off; or when the wind strengthens, the blade angles must be adjusted.

A problem with the prior art is that as the blade angles are locked in place, they are subjected to torque moments due to the effect of the wind, which tend to change the blade angles. All these forces are directed to one tooth on the gear rim and in the cogwheel; that is, to those teeth that at that moment of adjustment happen to be opposite each other and attached to one another. The varying forces chafe the teeth against one another being able to cause serious damage to them even in a couple of days. In the wind plant field, this disadvantage is called the "problem of the first tooth."

In the prior art, there has been an attempt to alleviate this problem by injecting lubricant to the tooth contact. Another known way is to regularly drive the blade angles back and forth, e.g. once an hour, and at the same time lubricate the contact surfaces in question while they are apart from one another. As a third way, one knows the turning of the blade once around, which is to be done 2 to 4 times a year during maintenance, whereupon the same teeth of the cogwheel as well as of the gear rim are not in continuous contact with one another. This also reduces the risk of abrasion of the teeth.

By the aforementioned methods one has been able to reduce the abrasion of the teeth, but they are not able to completely avoid this problem. In this manner, at intervals, expensive cogwheels and gear rims of wind power plants have to be replaced.

### OBJECTIVE OF THE INVENTION

It is an objective of the invention to eliminate the drawbacks referred to above.

One specific objective of the invention is to disclose a solution which enables one to completely avoid the abrasion of the gear rim and the cogwheel; and in this manner, they can be made to endure the whole service life of the wind power plant; that is, their service life can be made the same as the service life of the rotor.

### SUMMARY OF THE INVENTION

The device of the invention for adjusting the blade angle of a rotor blade of a wind power plant is characterized by what has been presented in claim 1.

The device of the invention for adjusting the blade angle of a rotor blade of a wind power plant includes a gear rim supported on the blade as well as a gear wheel with power units, supported on the centre of the rotor, for turning the gear rim and the blade angle of the blade together with it. According to the invention, between the gear rim and the gear wheel there is a power transmission element of a material with a weaker abrasion resistance than the materials of the gear rim and gear wheel, the power transmission element being arranged to prevent a direct contact between the gear rim and the gear wheel. In this manner, according to the invention, the gear rim and gear wheel, which are of a harder material, are not in direct contact with one another, but between them there always is a material with a weaker abrasion resistance, which material is pressed between the gear rim and the gear wheel. In this manner, the expensive gear rim and gear wheel, which are difficult to replace, do not wear, but the wear due to the chafing is completely directed to the softer power transmission element, which can be easily replaced with a new one in conjunction with normal maintenance and at relatively low cost.

In one embodiment of the invention, the power transmission element is a chain, belt or similar elongated element that is arranged to pass between the gear rim and the gear wheel so that it is in simultaneous contact with both teeth surfaces. In this manner, the gear rim and the gear wheel touch, or are supported or pressed against the power transmission element from opposite sides simultaneously.

In one embodiment of the invention, the power transmission element is a sprocket chain, such as a pin chain or a roller chain, whereby the teeth of the gear rim and those of the gear wheel are opposite each other, against each other, with the pin or roller of the sprocket chain being in simultaneous contact with the tooth of the gear rim and the tooth of the gear wheel. In that case, while disposed between the gear rim and the gear wheel, the pin or roller of the sprocket chain is partly between the two teeth of the gear rim and partly between the two teeth of the gear wheel. In this manner, as the tooth of the gear wheel pulls the sprocket chain forward, the pin or roller of the sprocket chain hits the tooth of the gear rim thereby turning the gear rim.

In another embodiment of the invention, the power transmission element is a flexible belt or band arranged between the teeth of the gear rim and gear wheel that mesh together to prevent their direct contact with one another. Preferably, the band is of a flexible material, such as of suitable plastic, whose compression resistance and tensile strength are sufficient. Moreover, preferably, the surface friction of the belt or band is low such the chafing against the teeth that are pressed against it is minimized.

It is possible that the flexible belt or band is a straight and sufficiently long strip that is suitably supported so as to stay in place between the gear rim and gear wheel. Preferably, however, it is a continuous loop allowing one to turn the blade more freely several times around.

In one embodiment, the elastic band is smooth and is not formed to conform to the surfaces of the teeth until it is pressed between the teeth of the gear rim and cogwheel. As the pressing ends, it will straighten again. In another embodiment, the elastic and flexible strip is already formed to be wavy and winding so as to conform to the shape of the teeth surfaces.

While it is possible that the power transmission element is at all times attached to the gear wheel or on the gear rim, such an embodiment is, however, more preferable where the length of the power transmission element is substantially smaller than the length of the gear rim and substantially bigger than the rim length of the cogwheel. In that case, the power transmission element is in contact with the gear rim and cogwheel only in a power transmission situation. For the rest of the time, it moves apart from both teeth and can be subjected to suitable maintenance measures.

Hence, in conjunction with the power transmission element there can be a lubrication arrangement for lubricating the power transmission element. In one embodiment, the lubrication arrangement is a lubrication device arranged to lubricate the power transmission element as it moves. The power transmission element can e.g. move through lubrication brushes, a lubrication jet or a lubrication chamber. In that case, preferably, the lubrication device is disposed as close as possible to the point where the power transmission element is pressed between the teeth. In this manner, even during small movements, the lubricant can be made to also reach the teeth. Similarly, it is also possible that the second tooth adjacent to this first tooth, which is subjected to stress, is lubricated with an abundant amount of grease at intervals, whereby the short back and forth adjustment movement of the toothing causes the lubricant to also spread into the area of the first tooth.

In another embodiment, the lubrication arrangement is formed by a lubricant arranged in the power transmission element that as the power transmission element is pressed between the teeth surfaces, is released and lubricates the surfaces. It is even possible that the power transmission element is made of a suitable plastic material, partly consisting of or including suitable lubricant, which when used, is released lubricating the contact surfaces.

In one embodiment of the invention, the abrasion of the teeth is further reduced by placing a limiter in the gear rim, which in the extreme position of the blade angle, is arranged to be supported on a fixed opposing piece. In this manner, when driving the blade angles to their extreme position, which usually is the storm position; that is the 0 angle, the electric brake coupled to the cogwheel can be left unlocked and the blade can be allowed to rest and be supported against the limiter. In this manner, the gear rim and gear wheel are idle, with no forces acting between them.

The device of the invention for adjusting the blade angle of a rotor blade of a wind power plant has significant advantages over prior art.

The invention enables one to practically completely avoid the abrasion of the gear rim of the blade and that of the gear wheel rotating it. This reduces the expensive and time-consuming maintenance measures, which in turn has an effect on the utilization factor of the wind power plant, and this way also on the amount of energy produced as well as on the profitability.

### LIST OF FIGURES

In the following section, the invention will be described in detail with reference to the accompanying drawings, in which
Fig. 1 represents a wind power plant for which the device of the invention is designed;
Fig. 2 represents the prevailing prior art;
Fig. 3 illustrates a first embodiment of a device in accordance with the invention;
Fig. 4 illustrates a second embodiment of a device in accordance with the invention;
Fig. 5 illustrates a third embodiment of a device in accordance with the invention; and
Fig. 6 illustrates one additional embodiment of a device in accordance with the invention.

### DETAILED DESCRIPTION OF THE INVENTION

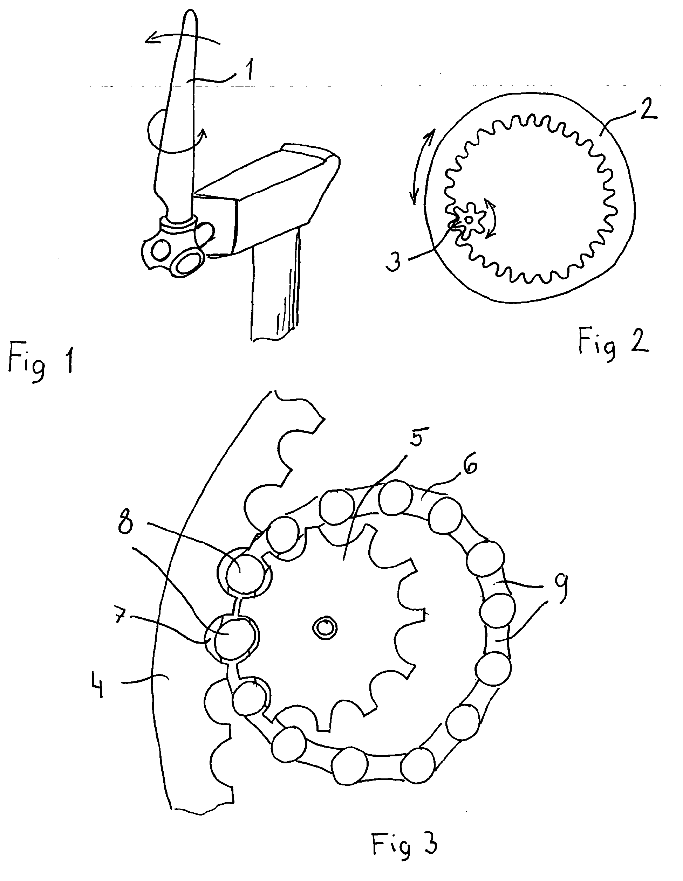

Fig. 1 shows a part of one wind power plant for which the device of the invention is suited to be used. In the figure there is a horizontal-axis three-blade rotor having a blade angle adjustment; that is, the blades are turned about their longitudinal axis to adjust the blade angle of the blade so as to be suitable.

As shown in Fig. 2, in accordance with the prior art, the adjustment of the blade angles is made as follows. In the blade 1 root there is a gear rim 2; and supported on the centre of the rotor there is a gear wheel 3, coupled to an electric motor to rotate it. In this manner, when rotating the gear wheel 3, the gear rim 2 rotates as well; and together with it, the blade always turns to the desired blade angle. When keeping the blade angle unchanged, it is done by electrically locking the gear wheel 3 in place. In this manner, the gear wheel 3 and the tooth each time facing it receives the wind forces directed to the blade that tend to turn it. Because in steady wind conditions, the locking can be in place even for days, one tooth can be subjected to stress that significantly damages it.

Fig. 3 shows one solution to the problem referred to above. Placed between the gear rim 4 and the gear wheel 5 rotating it is a chain 6 functioning as a power transmission element. The gear rim 4 and the gear wheel 5 have been so placed that their teeth do not mesh together but are opposite each other while rotating, whereby their teeth do not come into contact with each other. In that case between the teeth that are opposite each other, a space 7 is formed that is round in cross section. This space 7 accommodates, suitably tightly, a transverse roller 8 of the chain 6, which in the chain are connected by side plates 9. The chain 6 is made of a material softer than the gear rim 4 and the gear wheel 5. In this manner, substantially all abrasion between the chain and the gear rim and the gear wheel is directed to the chain, which can be easily changed in conjunction with maintenance.

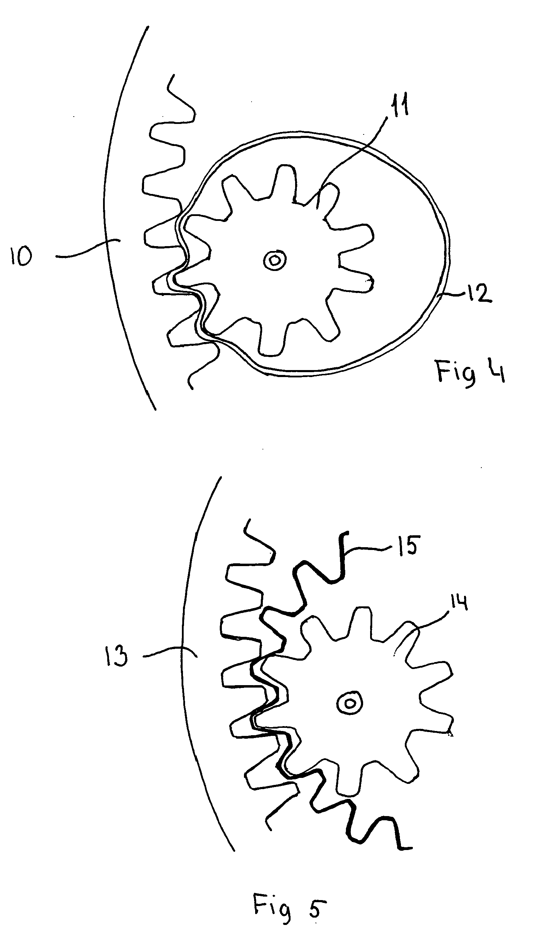

In a second embodiment of the invention shown in Fig. 4, the teeth of the gear rim 10 and the gear wheel 11 are placed so as to mesh together while rotating. However, they are so far apart from each other that a slot is formed between them having a continuous band 12 of a flexible and elastic material placed therein. The band 12 acts as a power transmission element between the gear rim 10 and the gear wheel 11 so that the gear rim and the gear wheel do not come into direct surface contact with each other at any point. In this manner a soft flange between the gear rim and the gear wheel prevents their abrasion and damaging of the surfaces in all conditions. Moreover, the band is simple and inexpensive to change in conjunction with maintenance.

In a third embodiment of the invention shown in Fig. 5, the gear rim 13 and the gear wheel 14 are similar to those shown in the embodiment of Fig. 4. In addition, a flexible belt is also here used as a power transmission element 15, but the only difference with respect to the embodiment of Fig. 4 is that the belt 15 is shaped to be wavelike and winding so as to quite faithfully conform to the shape of the teeth surfaces. In this manner, the durability of the belt is improved as it does not continuously bend or straighten between the teeth surfaces.

In all the embodiments of Figs. 3 to 5, the abrasion and chafing of the surfaces can be reduced by suitable lubrication arrangements. Due to this it is preferred that the power transmission belts and chains are clearly shorter in length than the corresponding gear rim, but longer than the rim of the corresponding gear wheel. In that case, a free loop is formed in the circulating, continuous belt or band, enabling one to place within it any kind of known lubricant, such as a brush, a jet, a chamber, etc.

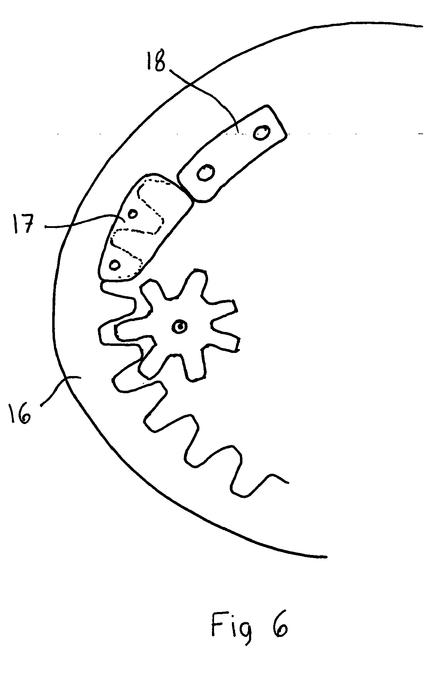

Fig. 6 shows an additional embodiment of the invention that improves the durability of the gear rim 16 still more. Therein, attached to the edge of the gear rim is a limiter 17, which in the extreme position of the blade, such as a zero position, is arranged to collide with a fixed opposing piece 18. In this manner, in the extreme position of the blade angle, the cogwheel together with the rim need not be locked by the motor, but the limiter 17 and the opposing piece 18 receive the wind-induced turning forces of the blade angle. This embodiment functions well in conjunction with the power transmission elements of Figs. 3 to 5, but it can also be used in a conventional blade adjustment system shown in Fig. 2.

The invention is not limited merely to the examples referred to above; instead many modifications are possible within the scope of the inventive idea defined by the claims.

## Claims

1. A device for adjusting the blade angle of a rotor blade of a wind power plant, the device comprising a gear rim (4) supported on the blade (1) as well as a gear wheel (5) with power units, supported on the centre of the rotor, for turning the gear rim together with the blade angle of the blade, **char- acterized in that** between the gear rim (4) and the gear wheel (5) there is a power transmission element (6) of a material with a weaker abrasion resistance than the materials of the gear rim and gear wheel, the power transmission element being arranged to prevent a direct contact between the gear rim and the gear wheel.

2. The device as defined in claim 1,
**characterized in that** the power transmission element (6, 12, 15) is a chain, belt or similar elongated element that is arranged to pass between the gear rim and the gear wheel while at the same time coming into contact with both teeth surfaces.

3. The device as defined in claim 1 or 2, **characterized in that** the power transmission element (6) is a sprocket chain, such as a pin chain or a roller chain, whereby the teeth of the gear rim and those of the gear wheel are opposite each other, against each other, with the pin or roller of the sprocket chain being in simultaneous contact with the tooth of the gear rim and the tooth of the gear wheel.

4. The device as defined in claim 1 or 2, **characterized in that** the power transmission element (12, 15) is a flexible belt or band, arranged between the teeth of the gear rim and those of the gear wheel that mesh together, to prevent their direct contact with each other.

5. The device as defined in any one of claims 1 to 4, **characterized in that** the length of the power transmission element is substantially smaller than length of the gear rim and substantially bigger than the rim length of the cogwheel so that the power transmission element is in contact with the gear rim and the cogwheel substantially only in a power transmission situation.

6. The device as defined in any one of claims 1 to 5, **characterized in that** in conjunction with the power transmission element there is a lubrication arrangement for lubricating the power transmission element.

7. The device as defined in claim 6,
**characterized in that** the lubrication arrangement is a lubrication device arranged to lubricate the power transmission element as it moves.

8. The device as defined in claim 6,
**characterized in that** the lubrication arrangement is formed by a lubricant arranged in the power transmission element that, as the power transmission element is pressed between the teeth surfaces, is released lubricating the surfaces.

9. The device as defined in any one of claims 1 to 8, **characterized in that** the gear rim (16) includes a limiter (17) arranged, in the extreme position of the blade angle of the blade, to be supported on a fixed opposing piece (18) so that the opposing piece receives the wind-induced turning forces directed to the blade.
